# EUROPEAN PATENT APPLICATION

(11) **EP 3 000 862 A1**
(43) Date of publication of application: **30.03.2016**
(21) Application number: 15164970.4
(22) Date of filing: 24.04.2015
(51) Int. Cl.: C09K 8/584, E21B 43/16

(54) **SURFACTANT COMPOSITION AND USE THEREOF IN ENHANCED OIL RECOVERY**

(71) Applicant: Shell Internationale Research Maatschappij B.V., 2596 HR Den Haag (NL)
(72) Inventor: MUL, Pim, 1031HW Amsterdam (NL); ROMMENS, Hidde Cornelis Willem, 1031HW Amsterdam (NL)
(74) Representative: Matthezing, Robert Maarten

(57) **Abstract**

The invention relates to a surfactant composition, which comprises a first surfactant and a second surfactant, wherein the first surfactant is an alkane sulfonate and the second surfactant is a compound of the formula (I) R-O-[R'-O]ₓ-X wherein R is a hydrocarbyl group, R'-O is an alkylene oxide group, x is the number of alkylene oxide groups R'-O, and X is a group comprising an anionic moiety. Further, the invention relates to a method of treating a hydrocarbon containing formation wherein said composition is used.

## Description

### Field of the invention

The present invention relates to a surfactant composition and to a method of treating a hydrocarbon containing formation using said surfactant composition.

### Background of the invention

Hydrocarbons, such as oil, may be recovered from hydrocarbon containing formations (or reservoirs) by penetrating the formation with one or more wells, which may allow the hydrocarbons to flow to the surface. A hydrocarbon containing formation may have one or more natural components that may aid in mobilising hydrocarbons to the surface of the wells. For example, gas may be present in the formation at sufficient levels to exert pressure on the hydrocarbons to mobilise them to the surface of the production wells. These are examples of so-called "primary oil recovery".

However, reservoir conditions (for example permeability, hydrocarbon concentration, porosity, temperature, pressure, composition of the rock, concentration of divalent cations (or hardness), etc.) can significantly impact the economic viability of hydrocarbon production from any particular hydrocarbon containing formation. Furthermore, the above-mentioned natural pressure-providing components may become depleted over time, often long before the majority of hydrocarbons have been extracted from the reservoir. Therefore, supplemental recovery processes may be required and used to continue the recovery of hydrocarbons, such as oil, from the hydrocarbon containing formation. Such supplemental oil recovery is often called "secondary oil recovery" or "tertiary oil recovery". Examples of known supplemental processes include waterflooding, polymer flooding, gas flooding, alkali flooding, thermal processes, solution flooding, solvent flooding, or combinations thereof.

In recent years there has been increased activity in developing new methods of chemical Enhanced Oil Recovery (cEOR) for maximising the yield of hydrocarbons from a subterranean reservoir. In surfactant cEOR, the mobilisation of residual oil is achieved through surfactants which generate a sufficiently low crude oil / water interfacial tension (IFT) to give a capillary number large enough to overcome capillary forces and allow the oil to flow (Lake, Larry W., "Enhanced oil recovery", PRENTICE HALL, Upper Saddle River, New Jersey, 1989, ISBN 0-13-281601-6).

However, different reservoirs can have different characteristics (for example composition of the rock, crude oil type, temperature, water composition, salinity, concentration of divalent cations (or hardness), etc.), and therefore, it is desirable that the structures and properties of the added surfactant(s) be matched to the particular conditions of a reservoir to achieve the required low IFT. In addition, other important criteria may have to be fulfilled, such as low rock retention or adsorption, compatibility with polymer, thermal and hydrolytic stability and acceptable cost (including ease of commercial scale manufacture).

In the present invention, it is desired to provide surfactant compositions and methods for cEOR utilising such compositions. More in particular, it is desired to provide surfactant compositions which may have a good cEOR performance, whilst at the same time having an adequate aqueous solubility, for example in terms of reducing the interfacial tension (IFT), as already described above. Further cEOR performance parameters other than said IFT, are optimal salinity and aqueous solubility at such optimal salinity. By "optimal salinity", reference is made to the salinity of the brine present in a mixture comprising said brine (a salt-containing aqueous solution), the hydrocarbons (e.g. oil) and the surfactant(s), at which salinity said IFT is lowest. A good microemulsion phase behavior for the surfactant is desired since this is indicative for such low IFT. In addition, it is desired that at or close to such optimal salinity, said aqueous solubility of the surfactant is sufficient to good.

Thus, in the present invention, it is desired to provide surfactant compositions wherein one or more of the above-mentioned cEOR performance parameters are adequate to good.

### Summary of the invention

It was found that a surfactant composition which may have one or more of such adequate to good cEOR performance parameters, is a composition which comprises a first surfactant and a second surfactant, wherein the first surfactant is an alkane sulfonate and the second surfactant is a compound of the formula (I)

Formula (I) R-O-[R'-O]ₓ-X

wherein R is a hydrocarbyl group, R'-O is an alkylene oxide group, x is the number of alkylene oxide groups R'-O, and X is a group comprising an anionic moiety.

Accordingly, the present invention relates to a surfactant composition as described above.

Further, the present invention relates to a method of treating a hydrocarbon containing formation, comprising the following steps:
a) providing the composition which comprises a first surfactant and a second surfactant as described above to at least a portion of the hydrocarbon containing formation; and
b) allowing the surfactants from the composition to interact with the hydrocarbons in the hydrocarbon containing formation.

### Brief description of the drawings

Figure 1 relates to an embodiment for application in cEOR.
Figure 2 relates to another embodiment for application in cEOR.

### Detailed description of the invention

In one aspect, the present invention relates to a composition which comprises the above-described first and second surfactants. The weight ratio of the first surfactant to the second surfactant may vary within wide ranges and may be in the range of from 0.01:1 to 100:1 or 0.05:1 to 10:1 or 0.1:1 to 5:1 or 0.15:1 to 1:1 or 0.2:1 to 0.6:1. In particular, it may be 0.25:1.

The first surfactant in the composition of the present invention is an alkane sulfonate. An alkane sulfonate is an alkane substituted by one or more sulfonate groups. Said alkane sulfonate is prepared from an alkane sulfonic acid which in turn is prepared from an alkane. Within the present specification, an alkane and an alkane sulfonate comprise a mixture of alkane molecules and a mixture of alkane sulfonate molecules, respectively. That is to say, within the present specification, "alkane" as such refers to a mixture of alkane molecules whereas "alkane molecule" refers to one of the components from such mixture. Analogously, within the present specification, "alkane sulfonate" as such refers to a mixture of alkane sulfonate molecules whereas "alkane sulfonate molecule" refers to one of the components from such mixture. Said molecules differ from each other for example in terms of carbon number and/or branching degree.

Branched alkane sulfonate molecules are alkane sulfonate molecules derived from alkane molecules which comprise one or more branches. Linear alkane sulfonate molecules are alkane sulfonate molecules derived from alkane molecules which are linear, that is to say which comprise no branches (unbranched alkane molecules). An alkane may be a mixture of linear alkane molecules and branched alkane molecules. Analogously, an alkane sulfonate may be a mixture of linear alkane sulfonate molecules and branched alkane sulfonate molecules.

An alkane and alkane sulfonate may be characterised by their carbon number and/or linearity. In case reference is made to an average carbon number, this means that the alkane or alkane sulfonate in question is a mixture of molecules which differ from each other in terms of carbon number.

Within the present specification, said average carbon number is determined by multiplying the number of carbon atoms of each molecule by the weight fraction of that molecule and then adding the products, resulting in a weight average carbon number. The average carbon number may be determined by gas chromatography (GC) analysis of the alkane.

Within the present specification, linearity is determined by dividing the weight of linear molecules by the total weight of branched, linear and cyclic molecules. Substituents (like the sulfonate group in alkane sulfonates) on the carbon chain are not seen as branches. The linearity may be determined by gas chromatography (GC) analysis of the alkane.

The foregoing passages regarding (average) carbon number and linearity apply analogously to the second surfactant as further described below.

In the present invention, the first surfactant is an alkane sulfonate which is an alkane substituted by one or more sulfonate groups. Preferably, said alkane is linear. Preferably at least 60 wt.%, more preferably at least 70 wt.%, more preferably at least 80 wt.%, most preferably at least 90 wt.% of the alkane is linear. For example, 60 to 100 wt.%, more suitably 70 to 99 wt.%, most suitably 80 to 99 wt.% of the alkane may be linear.

Further, preferably, said alkane is not substituted by groups other than sulfonic acid and sulfonate groups. Further, preferably, said alkanes do not contain unsaturated bonds. Further, preferably, said alkane has an average carbon number in the range of from 5 to 30, more preferably 8 to 25, more preferably 10 to 22, more preferably 12 to 20, more preferably 13 to 19, most preferably 14 to 17.

Still further, preferably, said alkane may have a carbon number distribution within broad ranges. For example, in the present invention, the alkane sulfonate may be selected from the group consisting of C₁₄₋₁₇ AS, C₁₈₋₂₀ AS, C₁₈₋₂₃ AS, C₁₉₋₂₄ AS and mixtures thereof, wherein "AS" stands for "alkane sulfonate". More preferably, the alkane sulfonate is selected from the group consisting of C₁₄₋₁₇ AS, C₁₈₋₂₀ AS and C₁₈₋₂₃ AS, even more preferably C₁₄₋₁₇ AS and C₁₈₋₂₀ AS. Most preferably, the alkane sulfonate is C₁₄₋₁₇ AS.

"C₁₄₋₁₇ alkane sulfonate" (C₁₄₋₁₇ AS) as used herein means a mixture of alkane sulfonates, wherein the mixture has an average carbon number of from 14.5 to 16.5 and at least 50% by weight, preferably at least 70% by weight, more preferably at least 80% by weight, most preferably at least 90% by weight, of the alkane sulfonates in the mixture contain from 14 to 17 carbon atoms.

Preferably 0 to 6, more preferably 0 to 4, most preferably 0 to 2 wt.% of said C₁₄₋₁₇ AS contains 13 or less carbon atoms. Preferably 20 to 60, more preferably 30 to 50, most preferably 35 to 45 wt.% of said C₁₄₋₁₇ AS contains 14 carbon atoms. Preferably 15 to 45, more preferably 20 to 40, most preferably 25 to 35 wt.% of said C₁₄₋₁₇ AS contains 15 carbon atoms. Preferably 8 to 32, more preferably 12 to 28, most preferably 15 to 25 wt.% of said C₁₄₋₁₇ AS contains 16 carbon atoms. Preferably 1 to 18, more preferably 4 to 15, most preferably 6 to 13 wt.% of said C₁₄₋₁₇ AS contains 17 carbon atoms. Preferably 0 to 6, more preferably 0 to 4, most preferably 0 to 2 wt.% of said C₁₄₋₁₇ AS contains 18 or more carbon atoms.

"C₁₈₋₂₀ alkane sulfonate" (C₁₈₋₂₀ AS) as used herein means a mixture of alkane sulfonates, wherein the mixture has an average carbon number of from 18.2 to 19.2 and at least 50% by weight, preferably at least 70% by weight, more preferably at least 80% by weight, most preferably at least 90% by weight, of the alkane sulfonates in the mixture contain from 18 to 20 carbon atoms.

Preferably 0 to 6, more preferably 0 to 4, most preferably 0 to 2 wt.% of said C₁₈₋₂₀ AS contains 16 or less carbon atoms. Preferably 0 to 8, more preferably 0 to 6, most preferably 0 to 5 wt.% of said C₁₈₋₂₀ AS contains 17 carbon atoms. Preferably 25 to 65, more preferably 35 to 55, most preferably 40 to 50 wt.% of said C₁₈₋₂₀ AS contains 18 carbon atoms. Preferably 20 to 50, more preferably 25 to 45, most preferably 30 to 40 wt.% of said C₁₈₋₂₀ AS contains 19 carbon atoms. Preferably 6 to 30, more preferably 10 to 26, most preferably 13 to 23 wt.% of said C₁₈₋₂₀ AS contains 20 carbon atoms. Preferably 0 to 10, more preferably 0 to 8, most preferably 0 to 7 wt.% of said C₁₈₋₂₀ AS contains 21 carbon atoms. Preferably 0 to 6, more preferably 0 to 4, most preferably 0 to 2 wt.% of said C₁₈₋₂₀ AS contains 22 or more carbon atoms.

"C₁₈₋₂₃ alkane sulfonate" (C₁₈₋₂₃ AS) as used herein means a mixture of alkane sulfonates, wherein the mixture has an average carbon number of from 19 to 21 and at least 50% by weight, preferably at least 70% by weight, more preferably at least 80% by weight, most preferably at least 90% by weight, of the alkane sulfonates in the mixture contain from 18 to 23 carbon atoms.

Preferably 0 to 6, more preferably 0 to 4, most preferably 0 to 2 wt.% of said C₁₈₋₂₃ AS contains 16 or less carbon atoms. Preferably 0 to 8, more preferably 0 to 6, most preferably 0 to 5 wt.% of said C₁₈₋₂₃ AS contains 17 carbon atoms. Preferably 1 to 18, more preferably 4 to 15, most preferably 6 to 13 wt.% of said C₁₈₋₂₃ AS contains 18 carbon atoms. Preferably 4 to 28, more preferably 8 to 24, most preferably 11 to 21 wt.% of said C₁₈₋₂₃ AS contains 19 carbon atoms. Preferably 8 to 32, more preferably 12 to 28, most preferably 15 to 25 wt.% of said C₁₈₋₂₃ AS contains 20 carbon atoms. Preferably 10 to 40, more preferably 15 to 35, most preferably 20 to 30 wt.% of said C₁₈₋₂₃ AS contains 21 carbon atoms. Preferably 8 to 32, more preferably 12 to 28, most preferably 15 to 25 wt.% of said C₁₈₋₂₃ AS contains 22 carbon atoms. Preferably 0 to 15, more preferably 1 to 12, most preferably 2 to 10 wt.% of said C₁₈₋₂₃ AS contains 23 carbon atoms. Preferably 0 to 6, more preferably 0 to 4, most preferably 0 to 2 wt.% of said C₁₈₋₂₃ AS contains 24 or more carbon atoms.

"C₁₉₋₂₄ alkane sulfonate" (C₁₉₋₂₄ AS) as used herein means a mixture of alkane sulfonates, wherein the mixture has an average carbon number of from 20 to 22 and at least 50% by weight, preferably at least 70% by weight, more preferably at least 80% by weight, most preferably at least 90% by weight, of the alkane sulfonates in the mixture contain from 19 to 24 carbon atoms.

Within the present specification, where reference is made to relative (e.g. weight) amounts of components in a mixture of components (e.g. said C₁₄₋₁₇ AS, C₁₈₋₂₀ AS and C₁₈₋₂₃ AS mixtures of components having different carbon numbers), such relative amounts are to be selected such that the total amount of said mixture does not exceed 100%.

Further, the cation for the alkane sulfonate may be any cation, such as an ammonium, alkali metal or alkaline earth metal cation, preferably an ammonium or alkali metal cation.

Generally, in alkane sulfonates the sulfonate group may be attached to a primary or secondary carbon atom, in the present invention preferably a secondary carbon atom. In the present invention, the alkane sulfonate may comprise primary and secondary sulfonates. Preferably, in the present invention, at most 5%, more preferably at most 2%, more preferably at most 1%, most preferably at most 0.5%, of the sulfonate groups is attached to a primary carbon atom.

In the present invention, the alkane sulfonate may comprise compounds of formulas (I) and (II) as a monosubstituted alkane and a disubstituted alkane, respectively: 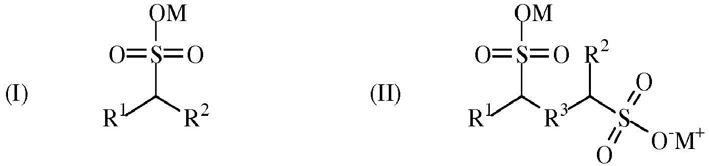 wherein the compound of formula (I) contains one sulfonate group and the compound of formula (II) contains two sulfonate groups; R¹ and R² are alkyl groups and R³ is a single bond or an alkylene group, which alkyl and alkylene groups are preferably linear, are preferably unsubstituted and preferably do not contain unsaturated bonds; and M is a cation as described above. Thus, the total carbon number for R¹ and R² and optionally R³ is preferably comprised within one of the above-mentioned average carbon number ranges.

Alkane sulfonates may be prepared from alkanes by any known method for preparing alkane sulfonates, including methods which comprise alkane sulfoxidation or sulfochlorination, as further discussed hereinbelow. A suitable preparation method is for example disclosed in EP0599385A1 (Enichem).

It is known to make alkane sulfonic acids from alkanes (paraffins) by means of sulfoxidation of the alkanes, mostly linear alkanes (n-paraffins). In such sulfoxidation, the alkane is reacted with sulfur dioxide (SO₂) and oxygen (O₂) in the presence of water whilst irradiating with ultraviolet (UV) light. By such irradiation, triplet sulfur dioxide is formed which in turn initiates the formation of alkyl radicals which are mostly secondary alkyl radicals. The alkyl radicals react with sulfur dioxide and then with oxygen, thereby forming radicals of the formula RS(=O)₂OO·. Abstraction of a hydrogen atom by such radical results in the formation of an alkyl radical and RS(=O)₂OOH. The latter peroxysulfonic acid is reduced by sulfur dioxide in the presence of water into the corresponding alkane sulfonic acid (RSO₃H) and sulfuric acid (H₂SO₄). The overall reaction is:

RH + 2SO₂ + O₂ + H₂O → RSO₃H + H₂SO₄

The alkane sulfonic acid (RSO₃H) may be converted into an anionic alkane sulfonate by reaction with a base, such as for example sodium hydroxide:

RSO₃H + NaOH → RSO₃Na + H₂O

Further, it is known to make alkane sulfonyl chlorides from alkanes (paraffins) by means of sulfochlorination of the alkanes and to hydrolyse such alkane sulfonyl chlorides into the corresponding alkane sulfonic acids. In such sulfochlorination, the alkane is reacted with sulfur dioxide (SO₂) and chlorine (Cl₂) whilst irradiating with visible light. By such irradiation, chlorine is dissociated into two chlorine radicals. Abstraction of hydrogen atoms by the chlorine radicals results in the formation of alkyl radicals which are mostly secondary alkyl radicals. Such alkyl radical reacts with sulfur dioxide and then with chlorine, thereby forming an alkane sulfonyl chloride (RSO₂Cl) and a chlorine radical. The overall reaction is:

RH + SO₂ + Cl₂ → RSO₂Cl + HCl

Using water, the alkane sulfonyl chloride (RSO₂Cl) may be hydrolysed into the corresponding alkane sulfonic acid (RSO₃H):

RSO₂Cl + H₂O → RSO₃H + HCl

Alternatively, the alkane sulfonyl chloride (RSO₂Cl) may be saponified into the corresponding anionic alkane sulfonate, using for example sodium hydroxide:

RSO₂Cl + 2NaOH → RSO₃Na + NaCl + H₂O

Such processes for preparing alkane sulfonic acids and sulfonates from alkanes involving sulfoxidation or sulfochlorination of the alkanes are for example described by H.G. Hauthal in "Alkanesulfonates" (Chapter 4, pages 143-221) in "Anionic surfactants: organic chemistry", edited by H.W. Stache (Surfactant science series, volume 56), Marcel Dekker, Inc., New York, 1995.

Commercial products comprising secondary alkane sulfonates (SAS) obtained by sulfoxidation of n-paraffins and subsequent neutralisation (reaction with a base) are for example the Hostapur® SAS products produced by Clariant (taken over by Weylchem per 1 January 2014). Some commercially available grades are Hostapur SAS 30, Hostapur SAS 60, Hostapur SAS 93 and Hostapur SAS 93 G, wherein said numbers 30, 60 and 93 refer to the active matter content (in %). These products are described in a brochure entitled "Hostapur ® SAS - A traditional specialty for innovative cleaner" by Clariant International Ltd., Muttenz, Switzerland, pages 1-56, 2013.

As appears from said Clariant brochure, the above-mentioned Hostapur SAS products are so-called sodium C14-17 secondary alkane sulfonates. Further, these products have been made by sulfoxidation of a mixture of n-paraffins.

The first surfactant as described above may replace an internal olefin sulfonate (IOS) in a surfactant composition, either partially or completely. A skilled person in the art is able to determine by means of routine experimentation, the amount for the first surfactant as described above which amount is needed to achieve a similar cEOR (oil recovery) performance.

The composition of the present invention additionally comprises a second surfactant which is a compound of the formula (I)

Formula (I) R-O-[R'-O]ₓ-X

wherein R is a hydrocarbyl group, R'-O is an alkylene oxide group, x is the number of alkylene oxide groups R'-O, and X is a group comprising an anionic moiety.

The hydrocarbyl group R in said formula (I) may be aliphatic or aromatic, suitably aliphatic. When said hydrocarbyl group R is aliphatic, it may be an alkyl group, cycloalkyl group or alkenyl group, suitably an alkyl group. Said hydrocarbyl group may be substituted by another hydrocarbyl group as described hereinbefore or by a substituent which contains one or more heteroatoms, such as a hydroxy group or an alkoxy group.

The non-alkoxylated alcohol R-OH, from which the hydrocarbyl group R in the above formula (I) originates, may be an alcohol containing 1 hydroxyl group (mono-alcohol) or an alcohol containing of from 2 to 6 hydroxyl groups (polyalcohol). Suitable examples of poly-alcohols are diethylene glycol, dipropylene glycol, glycerol, pentaerythritol, trimethylolpropane, sorbitol and mannitol. Preferably, in the present invention, the hydrocarbyl group R in the above formula (I) originates from a non-alkoxylated alcohol R-OH which only contains 1 hydroxyl group (mono-alcohol). Further, said alcohol may be a primary or secondary alcohol, preferably a primary alcohol.

The non-alkoxylated alcohol R-OH, wherein R is an aliphatic group and from which the hydrocarbyl group R in the above formula (I) originates, may comprise a range of different molecules which may differ from one another in terms of carbon number for the aliphatic group R, the aliphatic group R being branched or unbranched, number of branches for the aliphatic group R, and molecular weight.

Preferably, the hydrocarbyl group R in the above formula (I) is an alkyl group. Said alkyl group may be linear or branched, and has an average carbon number within wide ranges, such as from 5 to 30, suitably 5 to 25, more suitably 8 to 20, more suitably 9 to 18, more suitably 9 to 16, most suitably 9 to 14. In a case where said alkyl group is linear and contains 3 or more carbon atoms, the alkyl group is attached either via its terminal carbon atom or an internal carbon atom to the oxygen atom, preferably via its terminal carbon atom.

The alkylene oxide groups R'-O in the above formula (I) may comprise any alkylene oxide groups. For example, said alkylene oxide groups may comprise ethylene oxide groups, propylene oxide groups and butylene oxide groups or a mixture thereof, such as a mixture of ethylene oxide and propylene oxide groups. Preferably, said alkylene oxide groups consist of ethylene oxide groups or propylene oxide groups or a mixture of ethylene oxide and propylene oxide groups. In case of a mixture of different alkylene oxide groups, the mixture may be random or blockwise.

In the above formula (I), x represents the number of alkylene oxide groups R'-O. In the present invention, the average value for x may be at least 0.5, suitably of from 1 to 50, more suitably of from 1 to 40, more suitably of from 2 to 35, more suitably of from 2 to 30, more suitably of from 2 to 25, more suitably of from 3 to 20, more suitably of from 3 to 18, more suitably of from 4 to 16, most suitably of from 5 to 12.

The non-alkoxylated alcohol R-OH, from which the hydrocarbyl group R in the above formula (I) originates, may be prepared in any way. For example, a primary aliphatic alcohol may be prepared by hydroformylation of a branched olefin. Preparations of branched olefins are described in US5510306, US5648584 and US5648585. Preparations of branched long chain aliphatic alcohols are described in US5849960, US6150222, US6222077.

The above-mentioned (non-alkoxylated) alcohol R-OH, from which the hydrocarbyl group R in the above formula (I) originates, may be alkoxylated by reacting with alkylene oxide in the presence of an appropriate alkoxylation catalyst. The alkoxylation catalyst may be potassium hydroxide or sodium hydroxide which is commonly used commercially. Alternatively, a double metal cyanide catalyst may be used, as described in US6977236. Still further, a lanthanum-based or a rare earth metal-based alkoxylation catalyst may be used, as described in US5059719 and US5057627. The alkoxylation reaction temperature may range from 90°C to 250°C, suitably 120 to 220°C, and super atmospheric pressures may be used if it is desired to maintain the alcohol substantially in the liquid state.

Preferably, the alkoxylation catalyst is a basic catalyst, such as a metal hydroxide, wich catalyst contains a Group IA or Group IIA metal ion. Suitably, when the metal ion is a Group IA metal ion, it is a lithium, sodium, potassium or cesium ion, more suitably a sodium or potassium ion, most suitably a potassium ion. Suitably, when the metal ion is a Group IIA metal ion, it is a magnesium, calcium or barium ion. Thus, suitable examples of the alkoxylation catalyst are lithium hydroxide, sodium hydroxide, potassium hydroxide, cesium hydroxide, magnesium hydroxide, calcium hydroxide and barium hydroxide, more suitably sodium hydroxide and potassium hydroxide, most suitably potassium hydroxide. Usually, the amount of such alkoxylation catalyst is of from 0.01 to 5 wt.%, more suitably 0.05 to 1 wt.%, most suitably 0.1 to 0.5 wt.%, based on the total weight of the catalyst, alcohol and alkylene oxide (i.e. the total weight of the final reaction mixture).

The alkoxylation procedure serves to introduce a desired average number of alkylene oxide units per mole of alkoxylated alcohol (that is alkoxylated alcohol), wherein different numbers of alkylene oxide units are distributed over the alkoxylated alcohol molecules. For example, treatment of an alcohol with 7 moles of alkylene oxide per mole of primary alcohol serves to effect the alkoxylation of each alcohol molecule with 7 alkylene oxide groups, although a substantial proportion of the alcohol will have become combined with more than 7 alkylene oxide groups and an approximately equal proportion will have become combined with less than 7. In a typical alkoxylation product mixture, there may also be a minor proportion of unreacted alcohol.

The alkoxylated alcohol of formula R-O-[R'-O]ₓ-H wherein R and R'-O are as described above for the compound of the above formula (I), which alkoxylated alcohol may be used to prepare the compound of the above formula (I) from, may be any alkoxylated alcohol. Suitable examples of commercially available alkoxylated alcohol mixtures include the NEODOL (NEODOL, as used throughout this text, is a trademark) alkoxylated alcohols, sold by Shell Chemical Company, including mixtures of ethoxylates of C₉, C₁₀ and C₁₁ alcohols wherein the average value for the number of the ethylene oxide groups is 8 (NEODOL 91-8 alcohol ethoxylate); mixtures of ethoxylates of C₁₄ and C₁₅ alcohols wherein the average value for the number of the ethylene oxide groups is 7 (NEODOL 45-7 alcohol ethoxylate); and mixtures of ethoxylates of C₁₂, C₁₃, C₁₄ and C₁₅ alcohols wherein the average value for the number of the ethylene oxide groups is 12 (NEODOL 25-12 alcohol ethoxylate).

X in the above formula (I) is a group comprising an anionic moiety. Said group comprising an anionic moiety may be selected from the group consisting of a group comprising a carboxylate moiety, a group comprising a sulfonate moiety, and a group comprising a sulfate moiety. Preferably, said group comprising an anionic moiety is a group comprising a sulfate moiety.

In the present invention, the cation for the second surfactant may be any cation, such as an ammonium, alkali metal or alkaline earth metal cation, preferably an ammonium or alkali metal cation. Compounds of the above formula (I), wherein X is a group comprising an anionic moiety, may be prepared from the above-described alkoxylated alcohols of the formula R-O-[R'-O]ₓ-H, as is further described hereinbelow.

In a case where X in the above formula (I) is a group comprising a carboxylate moiety, the second surfactant is of the formula (II)

Formula (II) R-O-[R'-O]ₓ-L-C(=O)O⁻

wherein R, R' and x have the above-described meanings and L is an alkyl group, suitably a C₁-C₄ alkyl group, which may be unsubstituted or substituted, and wherein the -C(=O)O⁻ moiety is the carboxylate moiety.

The alkoxylated alcohol R-O-[R'-O]ₓ-H may be carboxylated by any one of a number of well-known methods. It may be reacted, preferably after deprotonation with a base, with a halogenated carboxylic acid, for example chloroacetic acid, or a halogenated carboxylate, for example sodium chloroacetate. Alternatively, the alcoholic end group may be oxidized to yield a carboxylic acid, in which case the number x (number of alkylene oxide groups) is reduced by 1. Any carboxylic acid product may then be neutralized with an alkali metal base to form a carboxylate surfactant.

In a specific example, an alkoxylated alcohol may be reacted with potassium t-butoxide and initially heated at for example 60°C under reduced pressure for for example 10 hours. It would be allowed to cool and then sodium chloroacetate would be added to the mixture. The reaction temperature would be increased to for example 90°C under reduced pressure for for example 20-21 hours. It would be cooled to room temperature and water and hydrochloric acid would be added. This would be heated to for example 90°C for for example 2 hours. The organic layer may be extracted by adding ethyl acetate and washing it with water.

In a case where X in the above formula (I) is a group comprising a sulfonate moiety, the second surfactant is of the formula (III)

Formula (III) R-O-[R'-O]ₓ-L-S(=O)₂O⁻

wherein R, R' and x have the above-described meanings and L is an alkyl group, suitably a C₁-C₄ alkyl group, which may be unsubstituted or substituted, and wherein the -S(=O)₂O⁻ moiety is the sulfonate moiety.

The alkoxylated alcohol R-O-[R'-O]ₓ-H may be sulfonated by any one of a number of well-known methods. It may be reacted, preferably after deprotonation with a base, with a halogenated sulfonic acid, for example chloroethyl sulfonic acid, or a halogenated sulfonate, for example sodium chloroethyl sulfonate. Any resulting sulfonic acid product may then be neutralized with an alkali metal base to form a sulfonate surfactant.

Particularly suitable sulfonate surfactants are glycerol sulfonates. Glycerol sulfonates may be prepared by reacting the alkoxylated alcohol R-O-[R'-O]ₓ-H with epichlorohydrin, preferably in the presence of a catalyst such as tin tetrachloride, for example at from 110 to 120 °C and for from 3 to 5 hours at a pressure of 14.7 to 15.7 psia (100 to 110 kPa) in toluene. Next, the reaction product is reacted with a base such as sodium hydroxide or potassium hydroxide, for example at from 85 to 95 °C for from 2 to 4 hours at a pressure of 14.7 to 15.7 psia (100 to 110 kPa). The reaction mixture is cooled and separated in two layers. The organic layer is separated and the product isolated. It may then be reacted with sodium bisulfite and sodium sulfite, for example at from 140 to 160°C for from 3 to 5 hours at a pressure of 60 to 80 psia (400 to 550 kPa). The reaction is cooled and the product glycerol sulfonate is recovered. Such glycerol sulfonate has the formula R-O-[R'-O]ₓ-CH₂-CH(OH)-CH₂-S(=O)₂O⁻.

In a case where X in the above formula (I) is a group comprising a sulfate moiety, the second surfactant is of the formula (IV)

Formula (IV) R-O-[R'-O]ₓ-O-S(=O)₂O⁻

wherein R, R' and x have the above-described meanings and and the -O-S(=O)₂O⁻ moiety is the sulfate moiety.

The alkoxylated alcohol R-O-[R'-O]ₓ-H may be sulfated by any one of a number of well-known methods. For example, said alkoxylated alcohol may be sulfated using one of a number of sulfating agents including sulfur trioxide, complexes of sulfur trioxide with (Lewis) bases, such as the sulfur trioxide pyridine complex and the sulfur trioxide trimethylamine complex, chlorosulfonic acid, sulfamic acid and oleum. Preferably, the sulfating agent is sulfur trioxide. The sulfation may be carried out at a temperature preferably not above 80°C. The sulfation may be carried out at temperature as low as -20°C, but higher temperatures are more economical. For example, the sulfation may be carried out at a temperature from 20 to 70°C, preferably from 20 to 60°C, and more preferably from 20 to 50°C.

The alkoxylated alcohols may be reacted with a gas mixture which contains from 1 to 8 vol.%, relative to the gas mixture, of gaseous sulfur trioxide, preferably from 1.5 to 5 vol.%. Other gases present in said gas mixture may be oxygen and/or one or more inert gases, preferably nitrogen.

The reaction of the alkoxylated alcohol with the sulfur trioxide containing gas mixture may be carried out in falling film reactors. Such reactors utilize a liquid film trickling in a thin layer on a cooled wall which is brought into contact in a continuous current with the gas. Other reactors include stirred tank reactors, which may be employed if the sulfation is carried out using sulfamic acid or a complex of sulfur trioxide and a (Lewis) base, such as the sulfur trioxide pyridine complex or the sulfur trioxide trimethylamine complex, or oleum.

Following sulfation, the liquid reaction mixture may be neutralized using an aqueous alkali metal hydroxide, such as sodium hydroxide or potassium hydroxide, or bases such as ammonium hydroxide, substituted ammonium hydroxide, sodium carbonate or potassium hydrogen carbonate. The neutralization procedure may be carried out over a wide range of temperatures and pressures. For example, the neutralization procedure may be carried out at a temperature from 0 °C to 65 °C and a pressure in the range from 100 to 200 kPa abs. Suitable reactors for this neutralization step comprise a loop reactor and a wiped film evaporator (WFE).

In the present invention, a cosolvent (or solubilizer) may be added to (further) increase the solubility of the surfactants in the surfactant composition of the present invention and/or in the below-mentioned injectable fluid comprising said composition. Suitable examples of cosolvents are polar cosolvents, including lower alcohols (for example sec-butanol and isopropyl alcohol) and polyethylene glycol. Any amount of cosolvent needed to dissolve all of the surfactant at a certain salt concentration (salinity) may be easily determined by a skilled person through routine tests.

Still further, the surfactant composition of the present invention may comprise a base (herein also referred to as "alkali"), preferably an aqueous soluble base, including alkali metal containing bases such as for example sodium carbonate and sodium hydroxide.

In yet another aspect, the present invention relates to a method of treating a hydrocarbon containing formation, comprising the following steps:
a) providing the composition which comprises a first surfactant and a second surfactant as described above to at least a portion of the hydrocarbon containing formation; and
b) allowing the surfactants from the composition to interact with the hydrocarbons in the hydrocarbon containing formation.

In the method of the present invention, the temperature in the hydrocarbon containing formation may be between 10°C and 150°C, optionally between 30°C and 90°C.

The water or brine in combination with which the surfactant composition of the present invention may be provided to at least a portion of the hydrocarbon containing formation may originate from the hydrocarbon containing formation or from any other source, such as river water, sea water or aquifer water.

In the method of the present invention, the salinity of said water or brine, which may originate from the hydrocarbon containing formation or from any other source, may be of from 0.5 to 30 wt.% or 0.5 to 20 wt.% or 0.5 to 10 wt.% or 1 to 6 wt.%. By said "salinity" reference is made to the concentration of total dissolved solids (%TDS), wherein the dissolved solids comprise dissolved salts. Said salts may be salts comprising divalent cations, such as magnesium chloride and calcium chloride, and salts comprising monovalent cations, such as sodium chloride and potassium chloride.

In the above-mentioned method of treating a hydrocarbon containing formation, the surfactants are applied in cEOR (chemical Enhanced Oil Recovery) at the location of the hydrocarbon containing formation, more in particular by providing the above-described surfactant composition to at least a portion of the hydrocarbon containing formation and then allowing the surfactants from said composition to interact with the hydrocarbons in the hydrocarbon containing formation. Said hydrocarbon containing formation may be a crude oil-bearing formation.

Normally, surfactants for enhanced hydrocarbon recovery are transported to a hydrocarbon recovery location and stored at that location in the form of an aqueous solution containing for example 30 to 35 wt.% of the surfactant(s). At the hydrocarbon recovery location, such solution would then be further diluted to a 0.05-2 wt.% solution, before it is injected into a hydrocarbon containing formation. By such dilution, an aqueous fluid is formed which fluid can be injected into the hydrocarbon containing formation, that is to say an injectable fluid. Advantageously, in the present invention, the water or brine used in such further dilution, which water or brine may originate from the hydrocarbon containing formation (from which hydrocarbons are to be recovered) or from any other source, may have a relatively high concentration of divalent cations, suitably in the above-described ranges. One of the advantages is that such water or brine no longer has to be pre-treated such as to remove said divalent cations, thereby resulting in significant savings in time and costs.

The total amount of the surfactants in said injectable fluid may be of from 0.05 to 2 wt.%, preferably 0.1 to 1.5 wt.%, more preferably 0.1 to 1.0 wt.%, most preferably 0.2 to 0.5 wt.%.

Hydrocarbons may be produced from hydrocarbon containing formations through wells penetrating such formations. "Hydrocarbons" are generally defined as molecules formed primarily of carbon and hydrogen atoms such as oil and natural gas. Hydrocarbons may also include other elements, such as halogens, metallic elements, nitrogen, oxygen and/or sulfur. Hydrocarbons derived from a hydrocarbon containing formation may include kerogen, bitumen, pyrobitumen, asphaltenes, oils or combinations thereof. Hydrocarbons may be located within or adjacent to mineral matrices within the earth. Matrices may include sedimentary rock, sands, silicilytes, carbonates, diatomites and other porous media.

A "hydrocarbon containing formation" may include one or more hydrocarbon containing layers, one or more non-hydrocarbon containing layers, an overburden and/or an underburden. An overburden and/or an underburden includes one or more different types of impermeable materials. For example, overburden/underburden may include rock, shale, mudstone, or wet/tight carbonate (that is to say an impermeable carbonate without hydrocarbons). For example, an underburden may contain shale or mudstone. In some cases, the overburden/underburden may be somewhat permeable. For example, an underburden may be composed of a permeable mineral such as sandstone or limestone.

Properties of a hydrocarbon containing formation may affect how hydrocarbons flow through an underburden/overburden to one or more production wells. Properties include porosity, permeability, pore size distribution, surface area, salinity or temperature of formation. Overburden/underburden properties in combination with hydrocarbon properties, capillary pressure (static) characteristics and relative permeability (flow) characteristics may affect mobilisation of hydrocarbons through the hydrocarbon containing formation.

Fluids (for example gas, water, hydrocarbons or combinations thereof) of different densities may exist in a hydrocarbon containing formation. A mixture of fluids in the hydrocarbon containing formation may form layers between an underburden and an overburden according to fluid density. Gas may form a top layer, hydrocarbons may form a middle layer and water may form a bottom layer in the hydrocarbon containing formation. The fluids may be present in the hydrocarbon containing formation in various amounts. Interactions between the fluids in the formation may create interfaces or boundaries between the fluids. Interfaces or boundaries between the fluids and the formation may be created through interactions between the fluids and the formation. Typically, gases do not form boundaries with other fluids in a hydrocarbon containing formation. A first boundary may form between a water layer and underburden. A second boundary may form between a water layer and a hydrocarbon layer. A third boundary may form between hydrocarbons of different densities in a hydrocarbon containing formation.

Production of fluids may perturb the interaction between fluids and between fluids and the overburden/underburden. As fluids are removed from the hydrocarbon containing formation, the different fluid layers may mix and form mixed fluid layers. The mixed fluids may have different interactions at the fluid boundaries. Depending on the interactions at the boundaries of the mixed fluids, production of hydrocarbons may become difficult.

Quantification of energy required for interactions (for example mixing) between fluids within a formation at an interface may be difficult to measure. Quantification of energy levels at an interface between fluids may be determined by generally known techniques (for example spinning drop tensiometer). Interaction energy requirements at an interface may be referred to as interfacial tension. "Interfacial tension" as used herein, refers to a surface free energy that exists between two or more fluids that exhibit a boundary. A high interfacial tension value (for example greater than 10 dynes/cm) may indicate the inability of one fluid to mix with a second fluid to form a fluid emulsion. As used herein, an "emulsion" refers to a dispersion of one immiscible fluid into a second fluid by addition of a compound that reduces the interfacial tension between the fluids to achieve stability. The inability of the fluids to mix may be due to high surface interaction energy between the two fluids. Low interfacial tension values (for example less than 1 dyne/cm) may indicate less surface interaction between the two immiscible fluids. Less surface interaction energy between two immiscible fluids may result in the mixing of the two fluids to form an emulsion. Fluids with low interfacial tension values may be mobilised to a well bore due to reduced capillary forces and subsequently produced from a hydrocarbon containing formation. Thus, in surfactant cEOR, the mobilisation of residual oil is achieved through surfactants which generate a sufficiently low crude oil / water interfacial tension (IFT) to give a capillary number large enough to overcome capillary forces and allow the oil to flow.

Mobilisation of residual hydrocarbons retained in a hydrocarbon containing formation may be difficult due to viscosity of the hydrocarbons and capillary effects of fluids in pores of the hydrocarbon containing formation. As used herein "capillary forces" refers to attractive forces between fluids and at least a portion of the hydrocarbon containing formation. Capillary forces may be overcome by increasing the pressures within a hydrocarbon containing formation. Capillary forces may also be overcome by reducing the interfacial tension between fluids in a hydrocarbon containing formation. The ability to reduce the capillary forces in a hydrocarbon containing formation may depend on a number of factors, including the temperature of the hydrocarbon containing formation, the salinity of water in the hydrocarbon containing formation, and the composition of the hydrocarbons in the hydrocarbon containing formation.

As production rates decrease, additional methods may be employed to make a hydrocarbon containing formation more economically viable. Methods may include adding sources of water (for example brine, steam), gases, polymers or any combinations thereof to the hydrocarbon containing formation to increase mobilisation of hydrocarbons.

In the present invention, the hydrocarbon containing formation is thus treated with the diluted or not-diluted surfactants containing solution, as described above. Interaction of said solution with the hydrocarbons may reduce the interfacial tension of the hydrocarbons with one or more fluids in the hydrocarbon containing formation. The interfacial tension between the hydrocarbons and an overburden/underburden of a hydrocarbon containing formation may be reduced. Reduction of the interfacial tension may allow at least a portion of the hydrocarbons to mobilise through the hydrocarbon containing formation.

The ability of the surfactants containing solution to reduce the interfacial tension of a mixture of hydrocarbons and fluids may be evaluated using known techniques. The interfacial tension value for a mixture of hydrocarbons and water may be determined using a spinning drop tensiometer. An amount of the surfactants containing solution may be added to the hydrocarbon/water mixture and the interfacial tension value for the resulting fluid may be determined.

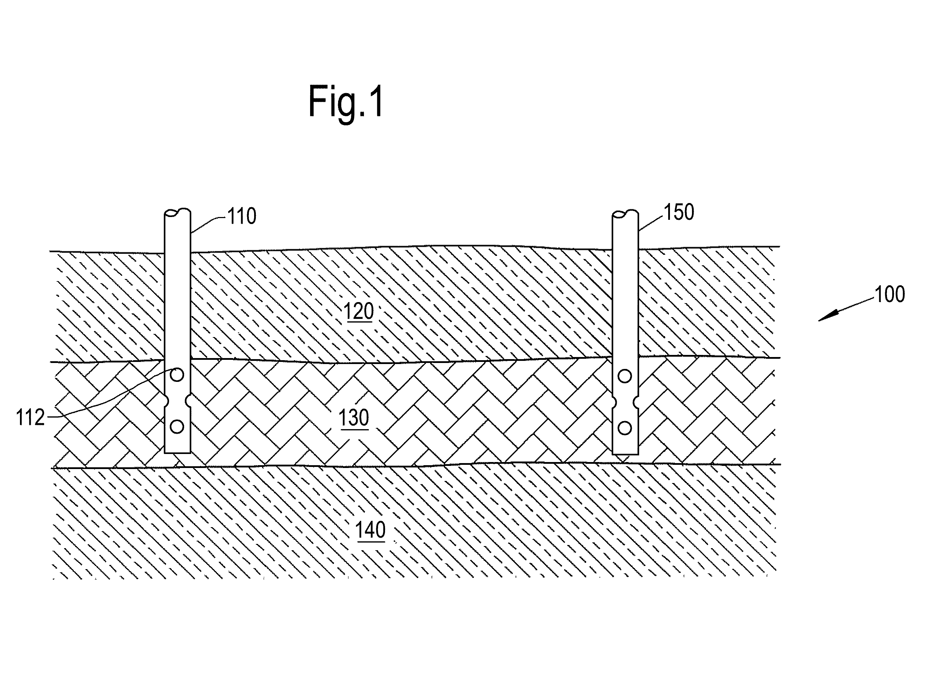

The surfactants containing solution, diluted or not diluted, may be provided (for example injected in the form of a diluted aqueous fluid) into hydrocarbon containing formation 100 through injection well 110 as depicted in Figure 1. Hydrocarbon containing formation 100 may include overburden 120, hydrocarbon layer 130 (the actual hydrocarbon containing formation), and underburden 140. Injection well 110 may include openings 112 (in a steel casing) that allow fluids to flow through hydrocarbon containing formation 100 at various depth levels. Low salinity water may be present in hydrocarbon containing formation 100.

The surfactants from the surfactants containing solution may interact with at least a portion of the hydrocarbons in hydrocarbon layer 130. This interaction may reduce at least a portion of the interfacial tension between one or more fluids (for example water, hydrocarbons) in the formation and the underburden 140, one or more fluids in the formation and the overburden 120 or combinations thereof.

The surfactants from the surfactants containing solution may interact with at least a portion of hydrocarbons and at least a portion of one or more other fluids in the formation to reduce at least a portion of the interfacial tension between the hydrocarbons and one or more fluids. Reduction of the interfacial tension may allow at least a portion of the hydrocarbons to form an emulsion with at least a portion of one or more fluids in the formation. The interfacial tension value between the hydrocarbons and one or more other fluids may be improved by the surfactants containing solution to a value of less than 0.1 dyne/cm or less than 0.05 dyne/cm or less than 0.001 dyne/cm.

At least a portion of the surfactants containing solution/hydrocarbon/fluids mixture may be mobilised to production well 150. Products obtained from the production well 150 may include components of the surfactants containing solution, methane, carbon dioxide, hydrogen sulfide, water, hydrocarbons, ammonia, asphaltenes or combinations thereof. Hydrocarbon production from hydrocarbon containing formation 100 may be increased by greater than 50% after the surfactants containing solution has been added to a hydrocarbon containing formation.

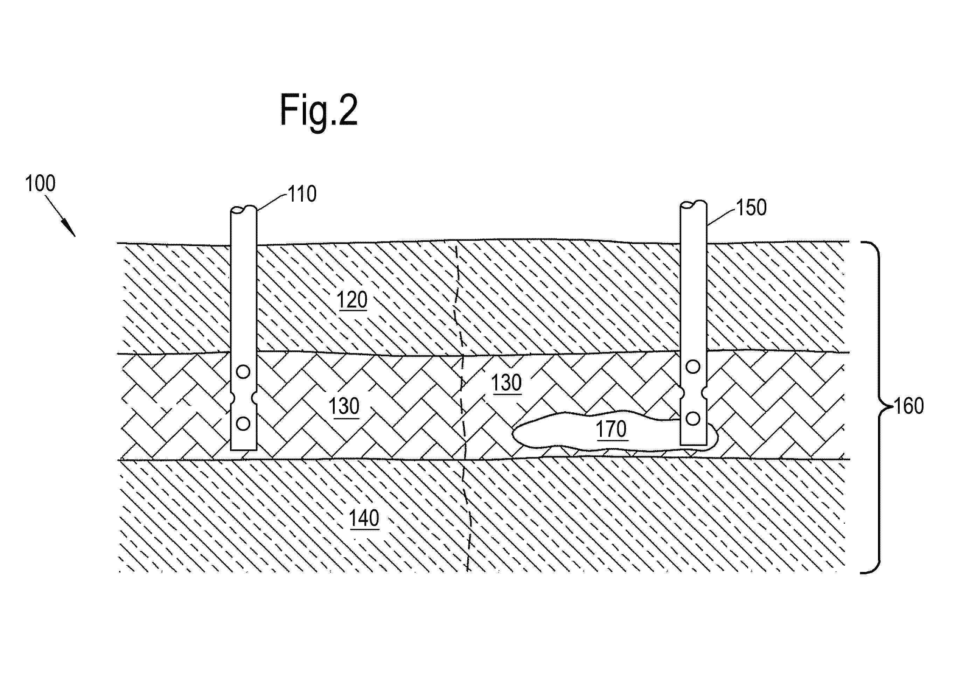

The surfactants containing solution, diluted or not diluted, may also be injected into hydrocarbon containing formation 100 through injection well 110 as depicted in Figure 2. Interaction of the surfactants from the surfactants containing solution with hydrocarbons in the formation may reduce at least a portion of the interfacial tension between the hydrocarbons and underburden 140. Reduction of at least a portion of the interfacial tension may mobilise at least a portion of hydrocarbons to a selected section 160 in hydrocarbon containing formation 100 to form hydrocarbon pool 170. At least a portion of the hydrocarbons may be produced from hydrocarbon pool 170 in the selected section of hydrocarbon containing formation 100.

It may be beneficial under certain circumstances that an aqueous fluid, wherein the surfactants containing solution is diluted, contains inorganic salt, such as sodium chloride, sodium hydroxide, potassium chloride, ammonium chloride, sodium sulfate or sodium carbonate. Such inorganic salt may be added separately from the surfactants containing solution or it may be included in the surfactants containing solution before it is diluted in water. The addition of the inorganic salt may help the fluid disperse throughout a hydrocarbon/water mixture and to reduce surfactant loss by adsorption onto rock. This enhanced dispersion may decrease the interactions between the hydrocarbon and water interface. The decreased interaction may lower the interfacial tension of the mixture and provide a fluid that is more mobile.

## Claims

1. Surfactant composition, which comprises a first surfactant and a second surfactant, wherein the first surfactant is an alkane sulfonate and the second surfactant is a compound of the formula (I)
Formula (I) R-O-[R'-O]ₓ-X
wherein R is a hydrocarbyl group, R'-O is an alkylene oxide group, x is the number of alkylene oxide groups R'-O, and X is a group comprising an anionic moiety.

2. Composition according to claim 1, wherein X in the formula (I) is a group comprising an anionic moiety which is selected from the group consisting of a group comprising a carboxylate moiety, a group comprising a sulfonate moiety, and a group comprising a sulfate moiety.

3. Composition according to claim 1, wherein the group comprising an anionic moiety is a group comprising a sulfate moiety.

4. Composition according to any one of the preceding claims, wherein the alkane sulfonate is selected from the group consisting of C₁₄₋₁₇ AS, C₁₈₋₂₀ AS, C₁₈₋₂₃ AS, C₁₉₋₂₄ AS and mixtures thereof, preferably from the group consisting of C₁₄₋₁₇ AS, C₁₈₋₂₀ AS and C₁₈₋₂₃ AS, wherein "AS" stands for "alkane sulfonate".

5. A method of treating a hydrocarbon containing formation, comprising the following steps:
a) providing the composition which comprises a first surfactant and a second surfactant according to any one of claims 1-4 to at least a portion of the hydrocarbon containing formation; and
b) allowing the surfactants from the composition to interact with the hydrocarbons in the hydrocarbon containing formation.
